# FASCICULE DE BREVET EUROPEEN

(11) **EP 4 217 239 B1**
(45) Date de publication et mention de la délivrance du brevet: **28.01.2026**
(21) Numéro de dépôt: 21786529.4
(22) Date de dépôt: 22.09.2021
(51) Int. Cl.: B60R 19/18, B60R 21/34

(54) **SUPPORT DE PARE-CHOCS À RUPTURE PROGRAMMÉE**
STOSSFÄNGERHALTERUNG MIT PROGRAMMIERTEM BRUCH
BUMPER MOUNT WITH PROGRAMMED RUPTURE

(30) Priorité: 25.09.2020 FR 2009769
(43) Date de publication de la demande: 02.08.2023
(73) Titulaire: Stellantis Auto SAS, 78300 Poissy (FR)
(72) Inventeur: RIVIERE, Claude, 94240 L'Haÿ les Roses (FR); IDALI, Jihane, Safi, 46000 (MA)
(74) Mandataire: BCIP
(86) Numéro de dépôt international: PCT/FR2021/051629
(87) Numéro de publication internationale: WO 2022/064141

(56) Documents cités:
- WO-A1-2010/084284

## Description

L'invention concerne un support de pare-chocs avant de véhicule, ainsi qu'un véhicule équipé d'un tel support de pare-chocs.

L'avant d'un véhicule comporte généralement un pare-chocs comportant une peau de pare-chocs, deux projecteurs avant disposés de part et d'autre de la face avant du véhicule, ainsi qu'un capot moteur dont la partie avant, classiquement nommé nez de capot, est à proximité de la partie haute de la peau de pare-chocs. Un élément de décoration de type calandre est parfois disposée entre le nez de capot et la partie haute de la peau de pare-chocs.

Il est connu de placer derrière la peau de pare-chocs avant du véhicule un support de pare-chocs. Ce support de pare-chocs est un élément rigide sur lequel s'appuie la peau de pare-chocs. Il permet de maintenir en forme la peau de pare-chocs qui est généralement réalisée par une pièce en matériau plastique souple de faible épaisseur. De plus, cette rigidité du support de pare-chocs permet d'y fixer des accessoires, comme par exemple un klaxon ou des faisceaux électriques. Ce support s'étend comporte une partie s'étendant au moins derrière la peau de pare-chocs, remontant parfois entre les deux phares avant du véhicule, et comporte une partie qui s'étend jusque sous le nez de capot.

La rigidité de ce support de pare-chocs est un inconvénient en cas de choc avant contre un piéton. En effet, il génère des points durs en cas de choc contre un piéton qui crée des efforts important sur le piéton, en particulier au niveau du fémur du piéton.

Pour améliorer la protection du piéton en cas de choc contre un véhicule, le document US10160418 propose d'installer un absorbeur de choc derrière la peau de pare-chocs à proximité de son bord longeant le nez de capot.

Cette solution nécessite d'ajouter un absorbeur derrière la peau de pare-chocs. Elle est chère et rajoute de la masse au véhicule.

L'objectif de l'invention est de remédier à ces inconvénients. En particulier, un des buts de l'invention est d'améliorer la protection des piétons en cas de choc. Notamment, un des buts de l'invention est de proposer un support de pare-chocs avant réduisant les risques de blessure en cas de choc piéton, qui soit simple à réaliser, sans rajouter de la masse au véhicule.

Ce but est atteint selon l'invention, grâce à un support de pare-chocs avant de véhicule comportant une première paroi reliée à une deuxième paroi non alignée avec ladite première paroi, la jonction entre ces deux parois s'étendant suivant une direction transversale au support, la première paroi étant destinée à être disposée derrière une peau de pare-chocs d'un véhicule, la deuxième paroi à s'étendre sous un nez de capot lorsque le support est installé sur un véhicule, remarquable en ce que la deuxième paroi comporte une première ligne frangible s'étendant dans la même direction transversale que la jonction entre la première et la deuxième paroi.

Ainsi avantageusement, en cas de choc contre un piéton, le support de pare-chocs va rompre au niveau de la première ligne frangible sous les efforts issus de l'impact avec le piéton. La rupture de la ligne frangible va permettre une réduction des efforts subit par le piéton, notamment au niveau du fémur, et réduire les risques de blessures. Mais le support reste suffisamment rigide pour maintenir correctement la peau de pare-chocs et supporter des accessoires en dehors de la situation de choc. De plus, cette conception permet de ne pas alourdir le support puisqu'il n'y pas de rajout de pièces.

D'après l'invention, la deuxième paroi comporte une ou plusieurs zones en reliefs entre la première ligne frangible et la jonction entre la première paroi et la deuxième paroi.

Ainsi avantageusement, la raideur de la première deuxième paroi est important sans ajouter de matière ou de pièces complémentaire, afin d'assurer un maintien efficace de la peau de pare-chocs et éventuellement d'accessoires qui seraient fixés sur la deuxième paroi, et donc sans ajout de masse.

D'après l'invention, le support de pare-chocs comporte une deuxième ligne frangible sur la deuxième paroi, disposée entre la ou les zones en relief et la jonction entre la première et la deuxième paroi.

La présence de la deuxième ligne frangible permet avantageusement un meilleur contrôle de l'effort transmis au piéton en cas de choc par un meilleur contrôle de la rupture de la deuxième paroi au moment du choc. Les risques de blessures au piéton sont réduits en cas de choc.

Dans un autre mode de réalisation de l'invention, la deuxième ligne frangible est disposée sur la deuxième paroi, le long de la jonction avec la première paroi.

Ces dispositions permettent avantageusement de favoriser la rupture dans des zones déterminées. En particulier, la position de la deuxième ligne frangible permet de réduire les efforts générés par la jonction entre les deux parois en cas de choc, cette jonction étant particulière rigide du fait d'être à l'angle entre les deux parois.

Dans un autre mode de réalisation de l'invention, la première ligne frangible et/ou la deuxième ligne frangible sont sous la forme d'une rainure dans la deuxième paroi.

Ainsi avantageusement, la ou les lignes frangibles sont réalisées sans complexifier le support de pare-chocs.

Dans un autre mode de réalisation de l'invention, le fond de la et/ou des rainures est moins épais que la partie de la deuxième paroi située autour de ladite rainure.

Cette disposition permet d'assurer la rupture de la deuxième paroi au fond de la rainure, tout au long de la rainure.

Dans un autre mode de réalisation de l'invention, le fond de la ou des rainures comporte des orifices traversant de sorte à réduire la résistance mécanique du fond de ladite rainure.

Ainsi avantageusement, le niveau d'effort permettant la rupture de la ligne frangible et les zones dans lesquelles elle doit s'initier est facilement adaptée en modifiant la quantité d'orifice. De plus, la mise au point du support suite à différents tests de choc est facile à réaliser : les modifications du support sont simples à réaliser, notamment dans le cas d'une fabrication par moulage, la création ou la suppression des orifices ne nécessitant pas des modifications importantes du moule. Un autre avantage est que les orifices permettent d'assurer les départs de rupture et d'améliorer la répétabilité et la fiabilité des ruptures.

L'invention porte aussi sur un véhicule (100) comportant une peau de parechocs (101), un capot (102) avant avec une partie avant nommée nez de capot, et un support (1) de peau de pare-chocs tel que décrit précédemment dont la première paroi (11) s'étend au moins en partie derrière la peau de pare-chocs (101) et la deuxième paroi (12) au moins en partie sous le nez de capot (102).

L'invention sera mieux comprise à la lecture de la description qui va suivre, donnée uniquement à titre d'exemple et faite en se référant aux dessins annexés, sur lesquels :
[Fig.1] représente l'avant d'un véhicule, le capot et la peau de pare-chocs avant étant en transparence, équipé d'un support de pare-chocs suivant l'invention.
[Fig.2] représente une partie de la deuxième paroi du support de pare-chocs au niveau d'une ligne frangible.
[Fig. 3] est une vue en coupe et en perspective de la deuxième paroi du support de pare-chocs.
[Fig. 4] représente une vue de la deuxième paroi du support de pare-chocs, vue de dessus dans le repère du véhicule, d'une variante du support de pare-chocs.

Les dessins sont des représentations schématiques pour faciliter la compréhension de l'invention. Les composants ne sont pas forcément représentés à l'échelle. Les mêmes références correspondent aux mêmes composants d'une figure à l'autre.

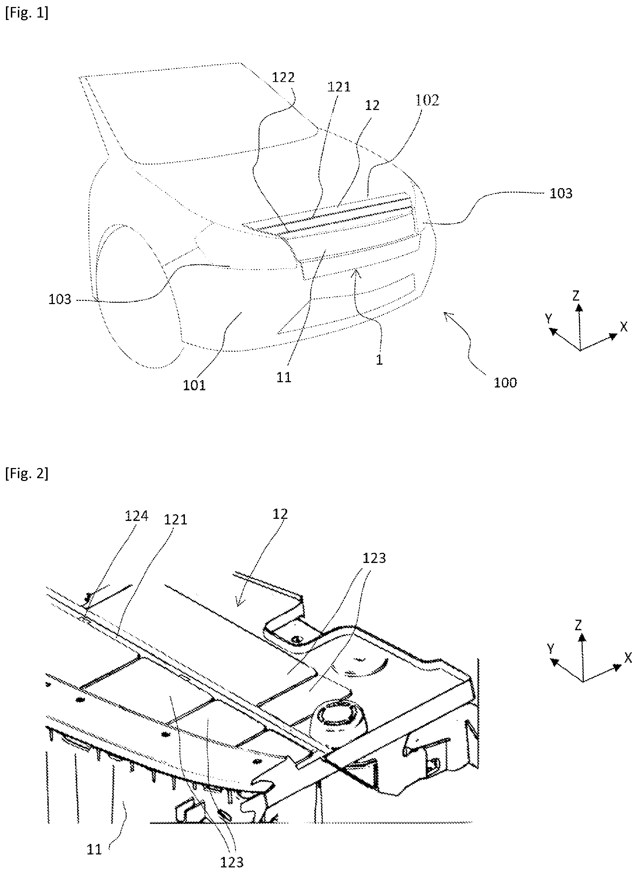

La figure 1 illustre l'avant d'un véhicule 100 comportant une peau de pare-chocs 101, un capot moteur dont la partie avant forme un nez de capot 102, et des projecteurs 103. Les projecteurs 103 sont disposés de part et d'autre de la face avant du véhicule 100. Le nez de capot 102 longe un bord supérieur de la peau de pare-chocs 101, le bord supérieur de la peau de pare-chocs 101 étant le bord situé en partie haute de ladite peau de pare-chocs 101 dans le référentiel du véhicule 100. Un support de pare-chocs 1 suivant l'invention est disposé au moins en partie derrière la peau de pare-chocs 101, c'est à dire du côté de ladite peau de pare-chocs 101 orientée du côté de l'intérieur du véhicule 100.

Le support de pare-chocs 1 comporte une première paroi 11 reliée à une deuxième paroi 12 non alignée avec ladite première paroi 11, c'est-à-dire que les plans généraux d'extension de chacune de ces parois 11, 12 ne sont pas parallèles entre eux. Autrement dit, la première paroi 11 s'étend suivant un premier plan général d'extension et la deuxième paroi 12 s'étend suivant un deuxième plan général d'extension, et le premier plan général d'extension n'est pas parallèle au deuxième plan général d'extension. La jonction entre ces deux parois 11, 12 s'étend suivant une direction transversale Y au support 1, correspondant à la direction transversale Y du véhicule 100 lorsque le support 1 est installé sur ledit véhicule 100. Autrement dit, la jonction entre les deux parois 11, 12 forme une ligne qui s'étend dans une direction dite transversale Y au support 1.

La première paroi 11 est disposée au moins en partie derrière la peau de pare-chocs 101. La deuxième paroi 12 s'étend au moins en partie sous le nez de capot 102.

Comme illustré en figure 2, la deuxième paroi 12 comporte une première ligne frangible 121 s'étendant dans la même direction d'extension que la jonction entre la première 11 et la deuxième paroi 12, c'est-à-dire sensiblement parallèlement à l'axe transversal Y du véhicule 100, distante de la jonction entre les deux parois 11 et 12. La deuxième paroi 12 comporte une ou plusieurs zones en relief 123, entre la première ligne frangible 121 et la jonction entre la première paroi 11 et la paroi deuxième 12. Une deuxième ligne frangible 122 sur la deuxième paroi 12 s'étend aussi sensiblement suivant l'axe transversal Y, entre la ou les zones en relief 123 et la jonction entre la première 11 et la deuxième paroi 12.

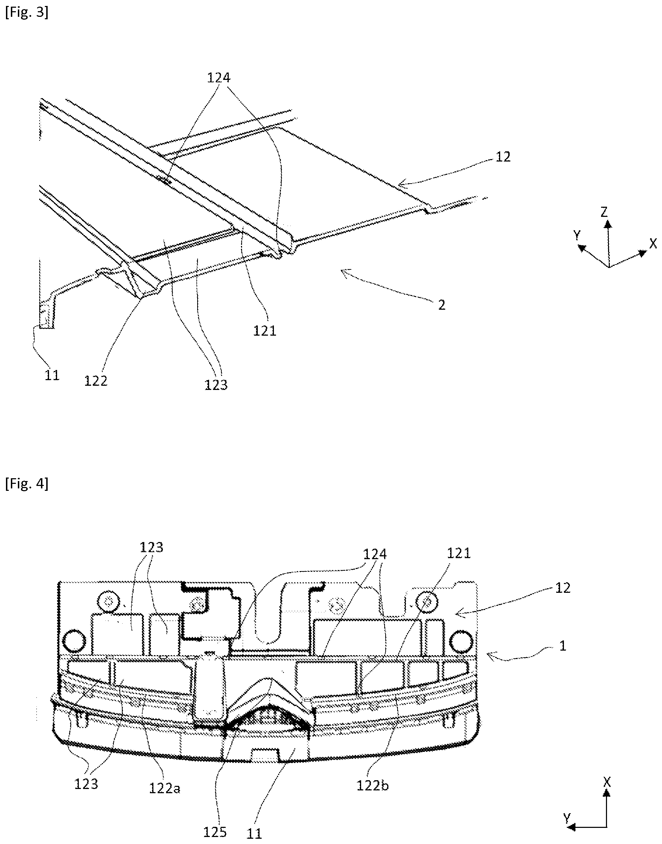

Comme illustré en figure 2 et 3, la première ligne frangible 121 et la deuxième ligne frangible 122 sont sous la forme d'une rainure dans la deuxième paroi 12. Ces rainures 121, 122 forment un creux dans la deuxième paroi 12, en direction du bas du véhicule 100. Ces rainures 121, 122 comportent un fond, c'est-à-dire une paroi formant le fond des rainures, qui est moins épais que la partie de la deuxième paroi 12 située autour desdites rainures 121, 122. Ce fond comporte des orifices 124 traversant, répartis tout au long des rainures 121 et 122. La répartition des orifices 124 est variable, de manière à adapter le comportement de chaque partie des rainures 121, 122 en cas de choc. Par exemple, la densité linéaire d'orifices 124 de la première rainure 121 peut être supérieure à celle de la deuxième rainure 122. De même, cette densité peut varier au long d'une même ligne par des espacements variables entre ces orifices 124. L'homme du métier adaptera la quantité d'orifices 124 au comportement qu'il souhaite obtenir. Les orifices 124 sont par exemple de forme oblongue, dont la plus grande dimension est dans le sens de la rainure dans laquelle ils se trouvent.

Dans le mode de réalisation de la figure 4, la deuxième nervure 122 longe la jonction entre la première paroi 11 et la deuxième 12. Dans ce mode de réalisation, la jonction entre la première 11 et la deuxième paroi 12 comporte une partie 125 en forme en V en son milieu, la pointe du V étant orientée à l'opposé de la première paroi 11. La deuxième ligne frangible 122 est formée de deux sections 122a et 122b s'étendant de part et d'autre du V, depuis chacune des extrémités libres des branches du V. Cette disposition permet de provoquer d'abord une rupture de ces sections de cette deuxième ligne frangible 122, puis une fois rompu, de faire monter les efforts au niveau de la pointe du V qui par sa forme va concentrer les efforts dans sa pointe et rompre à son tour.

En variante, la deuxième paroi 12 ne comporte qu'une seule ligne frangible.

En autre variante, la ligne frangible est réalisée par d'autres moyens, comme une simple réduction d'épaisseur de la deuxième paroi 12 ou encore par un changement de matière.

En autre variante, la forme des orifices peut être choisie différente en fonction de la position le long de la ligne de rupture.

En autre variante, la deuxième ligne frangible 122 peut être courbe, de manière à suivre la courbure de l'avant du véhicule 100, le long de la jonction entre la première paroi 11 et la deuxième paroi 12.

## Revendications

1. Véhicule (100) avec un support (1) de pare-chocs avant comportant une première paroi (11) reliée à une deuxième paroi (12) non alignée avec ladite première paroi (11), la jonction entre ces deux parois (11, 12) s'étendant suivant une direction transversale (Y) au support, la première paroi (11) étant destinée à être disposée derrière une peau de pare-chocs (101) du véhicule (100), la deuxième paroi (12) à s'étendre sous un nez de capot (102) lorsque le support (1) est installé sur le véhicule (100), la deuxième paroi (12) comportant une première ligne frangible (121) s'étendant dans la même direction transversale que la jonction entre la première (11) et la deuxième paroi (12), dont la deuxième paroi (12) comporte une ou plusieurs zones en reliefs (123), entre la première ligne frangible (121) et la jonction entre la première paroi (11) et la deuxième paroi (12), **caractérisé en ce que** la deuxième paroi (12) comporte une deuxième ligne frangible (122) qui est disposée entre la ou les zones en relief (123) et la jonction entre la première (11) et la deuxième paroi (12).

2. Véhicule (100) avec un support (1) de pare-chocs suivant la revendication précédente dont la deuxième ligne frangible (122) est disposée sur la deuxième paroi (12), le long de la jonction avec la première paroi (11).

3. Véhicule (100) avec un support (1) de pare-chocs suivant l'une des revendications précédentes, dont la première (121) ligne frangible et/ou la deuxième (122) ligne frangible sont sous la forme d'une rainure dans la deuxième paroi (12).

4. Véhicule (100) avec un support (1) de pare-chocs suivant la revendication 3, dont le fond de la et/ou des rainures (121, 122) est moins épais que la partie de la deuxième paroi (12) située autour de ladite rainure (121, 122).

5. Véhicule (100) avec un support (1) de pare-chocs suivant l'une des revendications de 3 ou 4, dont le fond de la ou des rainures (121, 122) comporte des orifices (124) traversant de sorte à réduire la résistance mécanique du fond de ladite rainure (121, 122).

6. Véhicule (100) comportant une peau de parechocs (101), un capot (102) avant avec une partie avant nommée nez de capot, et un support (1) de peau de pare-chocs, le véhicule avec un support (1) de pare-chocs (12) étant suivant l'une des revendications précédentes dont la première paroi (11) s'étend au moins en partie derrière la peau de pare-chocs (101) et la deuxième paroi (12) au moins en partie sous le nez de capot (102).

## Patentansprüche

1. Fahrzeug (100) mit einem vorderen Stoßfängerträger (1), der eine erste Wand (11) aufweist, die mit einer zweiten Wand (12) verbunden ist, die nicht mit der ersten Wand (11) fluchtet, wobei sich die Verbindung zwischen diesen beiden Wänden (11, 12) in einer Querrichtung (Y) zum Träger erstreckt, wobei die erste Wand (11) hinter einer Stoßfängerhaut (101) des Fahrzeugs (100) angeordnet werden soll, wobei sich die zweite Wand (12) unter einer Haubennase (102) erstreckt, wenn der Träger (1) am Fahrzeug (100) angebracht ist, wobei die zweite Wand (12) eine erste zerbrechliche Linie (121) aufweist, die sich in der gleichen Querrichtung wie die Verbindung zwischen der ersten (11) und der zweiten Wand (12) erstreckt, deren zweite Wand (12) einen oder mehrere erhabene Bereiche (123) zwischen der ersten zerbrechlichen Linie (121) und der Verbindung zwischen der ersten Wand (11) und der zweiten Wand (12) aufweist, **dadurch gekennzeichnet, dass** die zweite Wand (12) eine zweite zerbrechliche Linie aufweist (122) vorgesehen ist, die zwischen dem erhabenen Bereich bzw. den erhabenen Bereichen (123) und der Verbindung zwischen der ersten (11) und der zweiten Wand (12) angeordnet ist.

2. Fahrzeug (100) mit einem Stoßfängerträger (1) nach dem vorhergehenden Anspruch, dessen zweite Bruchlinie (122) an der zweiten Wand (12) entlang der Verbindung mit der ersten Wand (11) angeordnet ist.

3. Fahrzeug (100) mit einem Stoßfängerträger (1) nach einem der vorhergehenden Ansprüche, dessen erste (121) und/oder zweite (122) Sollbruchlinie in der zweiten Wand (12) als Nut ausgebildet sind.

4. Fahrzeug (100) mit einem Stoßfängerträger (1) nach Anspruch 3, dessen Boden der Nut und/oder Nuten (121, 122) weniger dick ist als der Teil der zweiten Wand (12), der um die Nut (121, 122) herum angeordnet ist.

5. Fahrzeug (100) mit einem Stoßfängerträger (1) nach einem der Ansprüche 3 oder 4, dessen Boden der Nut bzw. Nuten (121, 122) durchgehende Öffnungen (124) aufweist, um die mechanische Festigkeit des Bodens der Nut bzw. Nuten (121, 122) zu verringern.

6. Fahrzeug (100) mit einer Stoßstangenhaut (101), einer vorderen Haube (102) mit einem vorderen Teil, der als Haubennase bezeichnet wird, und einem Stoßstangenhauthalter (1), wobei das Fahrzeug mit einem Stoßstangenhalter (12) nach einem der vorhergehenden Ansprüche ausgebildet ist, dessen erste Wand (11) sich zumindest teilweise hinter der Stoßstangenhaut (101) und dessen zweite Wand (12) zumindest teilweise unter der Haubennase (102) erstreckt.

## Claims

1. Vehicle (100) with a front bumper support (1) comprising a first wall (11) connected to a second wall (12) not aligned with said first wall (11), the junction between these two walls (11, 12) extending in a management transverse (Y) to the support, the first wall (11) being intended to be arranged behind a bumper skin (101) of the vehicle (100), the second wall (12) extending under a hood nose (102) when the support (1) is installed on the vehicle (100), the second wall (12) comprising a first frangible line (121) extending in the same transverse management as the junction between the first wall (11) and the second wall (12), the second wall (12) of which comprises one or more raised zones (123), between the first frangible line (121) and the junction between the first wall (11) and the second wall (12), wherein the second wall (12) comprises a second frangible line (122) which is arranged between the raised zone(s) (123) and the junction between the first wall (11) and the second wall (12).

2. Vehicle (100) with a bumper support (1) according to the previous claim, the second frangible line (122) of which is arranged on the second wall (12), along the junction with the first wall (11).

3. Vehicle (100) with a bumper support (1) according to one of the previous claims, the first (121) of which is a breakable line and/or the second (122) is a breakable line and is in the form of a groove in the second wall (12).

4. Vehicle (100) with a bumper support (1) according to claim 3, the bottom of the groove and/or grooves (121, 122) of which is thinner than the part of the second wall (12) situated around said groove (121, 122).

5. Vehicle (100) with a bumper support (1) according to one of claims 3 or 4, the bottom of the groove or grooves (121, 122) of which comprises through orifices (124) so as to reduce the mechanical strength of the bottom of the groove (121, 122).

6. Vehicle (100) comprising a bumper skin (101), a front hood (102) with a front part called the hood nose, and a bumper skin support (1), the vehicle with a bumper support (1) (12) being according to one of the previous claims, the first wall (11) of which extends at least partly behind the bumper skin (101) and the second wall (12) at least partly under the hood nose (102).
